# EUROPÄISCHE PATENTSCHRIFT

(11) **EP 3 535 165 B1**
(45) Veröffentlichungstag und Bekanntmachung des Hinweises auf die Patenterteilung: **05.08.2020**
(21) Anmeldenummer: 17797098.5
(22) Anmeldetag: 26.10.2017
(51) Int. Cl.: B60R 21/20, B60R 21/201

(54) **GASSACK-MODUL SOWIE FAHRZEUGKAROSSERIE**
AIR BAG MODULE AND VEHICLE BODY
MODULE DE SAC GONFLABLE ET CARROSSERIE DE VÉHICULE

(30) Priorität: 03.11.2016 DE 202016106156 U
(43) Veröffentlichungstag der Anmeldung: 11.09.2019
(73) Patentinhaber: Dalphi Metal España, S.A., 36213 Vigo (ES)
(72) Erfinder: SANTÍN NAVARRO, Pedro, José, 36204 Vigo (ES); ABELENDA, Pilar, 36210 Vigo (ES); BOUZAS TOBIO, Patricia, 36209 Vigo (ES)
(74) Vertreter: ZF Patentabteilung - DIPS
(86) Internationale Anmeldenummer: PCT/EP2017/077402
(87) Internationale Veröffentlichungsnummer: WO 2018/082997

(56) Entgegenhaltungen:
- US-A- 5 542 699
- US-A- 5 671 943
- US-B2- 6 902 187

## Beschreibung

Die Erfindung betrifft ein Gassack-Modul für ein Kraftfahrzeug nach dem Oberbegriff von Anspruch 1.

Bestimmte Gassack-Module werden an der Fahrzeugkarosserie eines Kraftfahrzeugs während der Herstellung des Kraftfahrzeugs befestigt. Dies ist beispielsweise bei einigen sogenannter "curtain airbags" der Fall, also bei im Kraftfahrzeug seitlich angeordneten Gassäcken, die im Bereich des oberen Türrahmens angeordnet sind. Üblicherweise befindet sich das Kraftfahrzeug bei der Befestigung der Gassack-Module im "body-in-white"-Zustand (BIW-Zustand), in der die einzelnen Teile der Fahrzeugkarosserie bereits miteinander verschweißt worden sind. Dieser Zustand kann auch Rohkarosserie bezeichnet werden.

Für die Befestigung der Gassack-Module werden Schrauben oder Federklemmen verwendet, beispielsweise Klipse. In die Fahrzeugkarosserie müssen daher zunächst entsprechende Bohrungen bzw. Öffnungen eingebracht werden, in die die Schrauben bzw. die Klemmen bei der Befestigung der Gassack-Module eingesetzt werden, um das Gassack-Modul an der Fahrzeugkarosserie zu befestigen.

Als nachteilig hat sich hierbei herausgestellt, dass die Löcher bzw. Bohrungen in einem zusätzlichen Herstellungsschritt zunächst in die Fahrzeugkarosserie eingebracht werden müssen, wodurch sich der Montageaufwand und die damit einhergehenden Herstellungskosten erhöhen. Darüber hinaus ist die Flexibilität bei der Befestigung der Gassack-Module an der Fahrzeugkarosserie stark eingeschränkt, da die Löcher bzw. Bohrungen bereits an vordefinierten Stellen eingebracht worden sind.

In diesem Zusammenhang zeigt beispielsweise die US 6,902,187 B2 ein Gassack-Modul für ein Kraftfahrzeug der eingangs genannten Art, mit einem Gasgenerator, einem Halter für den Gasgenerator und einem gefalteten Gassack, den der Gasgenerator im Auslösefall aufbläst, sodass sich der Gassack entfaltet, wobei das Gassack-Modul wenigstens ein magnetisches Befestigungselement umfasst, über das das Gassack-Modul an einer Fahrzeugkarosserie des Kraftfahrzeugs befestigbar ist.

Somit reduziert sich der Montageaufwand des Gassack-Moduls, wobei gleichzeitig eine größere Flexibilität bei der Befestigung des Gassack-Moduls gegeben ist. Bei einem derartigen Gassack-Modul ist jedoch wünschenswert, dass sich der Gassack im Auslösefall immer in der gewünschten Weise aufbläst.

Für ein Gassack-Modul der eingangs genannten Art wird dieses Aufgabe erfindungsgemäß dadurch gelöst, dass der Halter eine Fixierungsstelle aufweist, über die unter anderem der gefaltete Gassack am Halter lagefixiert ist.

Die Lagefixierung stellt unter anderem sicher, dass sich der Gassack im Auslösefall in der gewünschten Weise aufbläst. Über die Fixierungsstelle ist die relative Lage des gefalteten Gassacks in Bezug auf den Halter und somit den daran angeordneten Gasgenerator sichergestellt, wodurch eine vordefinierte Entfaltungsrichtung gewährleistet ist. Beispielsweise ist ein Fixierungselement an der Fixierungsstelle vorgesehen, über den der gefaltete Gassack, insbesondere eine Lage des gefalteten Gassacks, mit dem Halter und der Gasgenerator mit dem Halter gekoppelt ist. Bei dem Fixierungselement kann es sich um einen Stift am Halter handeln, der insbesondere einstückig mit dem Halter ausgebildet ist, oder ein separates Fixierungselement wie eine Schraube oder ähnliches.

An der Fixierungsstelle kann darüber hinaus der Gasgenerator mit dem Halter gekoppelt sein, sofern dies gewünscht ist. Alternativ oder ergänzend ist der Gasgenerator im Halter geklemmt oder andersartig gehalten, beispielsweise über Sicherungsmittel.

Das Fixierungselement kann als (zusätzliche) mechanische Anbindung des Gassack-Moduls genutzt werden, sofern dies gewünscht ist.

Insbesondere ist die Fixierungsstelle an einem ersten Endbereich des Halters vorgesehen. Der erste Endbereich kann über den Gasgenerator hinaus in axialer Richtung abstehen, sodass der Gassack nicht im Bereich des Gasgenerators am Halter lagefixiert ist.

Ein Aspekt sieht vor, dass der Gassack über eine Fixierungslasche mit der Fixierungsstelle gekoppelt ist, insbesondere eingehängt ist. Bei der Fixierungslasche kann es sich um einen Gewebeabschnitt des Gassacks handeln, der eine Öffnung aufweist, durch die sich das Fixierungselement erstreckt. Die Fixierungslasche ist demnach einstückig mit dem Gassack ausgebildet. Hierdurch ist in einfacher Weise eine relative Fixierung des Gassacks zum Halter bzw. zum Gasgenerator gewährleistet.

Gemäß einem weiteren Aspekt ist das wenigstens eine magnetische Befestigungselement ein magnetisches Band, insbesondere ein magnetisches Klebeband. Das magnetische Befestigungselement lässt sich so in einfacher Weise an einem Teil des Gassack-Moduls anbringen. Sofern es sich bei dem magnetischen Band um ein magnetisches Klebeband handelt, welches selbstklebend ist, kann dieses in einfacher Weise an den entsprechenden Teil des Gassack-Moduls geklebt werden. Anschließend lässt sich das Gassack-Modul aufgrund der magnetischen Eigenschaften des magnetischen Befestigungselements am gewünschten Ort der Fahrzeugkarosserie anbringen. Das selbstklebende magnetische Band weist eine Klebeseite für den entsprechenden Teil des Gassack-Moduls und eine entgegengesetzte, magnetische Seite auf, die an der Fahrzeugkarosserie anliegt.

Ein weiterer Aspekt sieht vor, dass das wenigstens eine magnetische Befestigungselement so an einem Teil des Gassack-Moduls angeordnet ist, dass entgegengesetzte Enden des wenigstens einen Befestigungselements im Wesentlichen den gleichen Abstand zur Fixierungsstelle haben. Dementsprechend liegt die Mitte des magnetischen Befestigungselements in Draufsicht auf gleicher Höhe wie die Fixierungsstelle, insbesondere in Bezug auf die axiale Ausdehnung des Gassack-Moduls. Das magnetische Befestigungselement kann im Bereich der Fixierungsstelle vorgesehen sein, wodurch sich eine Befestigungsstelle des Gassack-Moduls an der Fahrzeugkarosserie im Bereich der Fixierungsstelle ergibt. Demnach liegt die Mitte des magnetischen Befestigungselements in etwa im ersten Endbereich des Halters.

Ferner kann das wenigstens eine magnetische Befestigungselement am gefalteten Gassack angeordnet sein. Sofern es sich bei dem magnetischen Befestigungselement um ein magnetisches Klebeband handelt, lässt sich dieses auf den gefalteten Gassack aufkleben, insbesondere auf eine Außenlage des gefalteten Gassacks. Die zur Klebeseite entgegengesetzte Seite des magnetischen Klebebands dient dementsprechend zur Befestigung des Gassack-Moduls an der Fahrzeugkarosserie. Sofern der gefaltete Gassack in einer Hülle angeordnet ist, kann das wenigstens eine magnetische Befestigungselement an der Hülle befestigt sein.

Ein weiterer Aspekt sieht vor, dass der gefaltete Gassack mittels eines ersten, umlaufenden Halteelements am Halter befestigt ist, insbesondere am zweiten Endbereich des Halters. Bei dem Halteelement kann es sich um ein klebendes Band oder eine Schelle handeln, über die der gefaltete Gassack am Halter angeordnet ist. Das Halteelement dient ferner zur Sicherung des gefalteten Gassacks, sodass dieser im gefalteten Zustand verbleibt und sich nicht von selbst entfaltet, beispielsweise aufgrund der Schwerkraft oder aufgrund von Erschütterungen.

Ferner kann der gefaltete Gassack mittels eines zweiten, umlaufenden Halteelements in seinem gefalteten Zustand gehalten sein. Das zweite, umlaufende Halteelement kann ebenfalls ein klebendes Band oder eine Schelle sein. Beispielsweise ist das Halteelement im Bereich eines axialen Endes des gefalteten Gassacks angeordnet, wodurch ebenfalls sichergestellt ist, dass sich der gefaltete Gassack an seinem axialen Ende nicht von selbst entfaltet.

Gemäß einem Aspekt ist das wenigstens eine magnetische Befestigungselement zwischen dem ersten und dem zweiten Halteelement angeordnet. Aufgrund der beiden Halteelemente ist sichergestellt, dass der gefaltete Gassack im entsprechenden Zwischenbereich eine definierte Form aufweist, wodurch eine Oberfläche geschaffen ist, die sich zur Anbringung des magnetischen Befestigungselements eignet. Dies gilt insbesondere für das selbstklebende magnetische Band.

Gemäß einer Ausführungsform weist das wenigstens eine magnetische Befestigungselement eine Länge von 100 mm bis 200 mm auf, insbesondere 150 mm. Bei dem magnetischen Befestigungselement kann es sich um ein langgezogenes magnetisches Befestigungselement handeln, das im Wesentlichen bandförmig ausgebildet ist. Die Breite des magnetischen Befestigungselements kann beispielsweise zwischen 1 mm und 10 mm betragen. Diese Dimensionen stellen im Wesentlichen sicher, dass das magnetische Befestigungselement eine ausreichend große Fläche hat und damit einhergehend eine ausreichend hohe magnetische Kraft ausübt, um das Gassack-Modul an der Fahrzeugkarosserie sicher zu befestigen.

Ein weiterer Aspekt sieht vor, dass das Gassack-Modul zwei magnetische Befestigungselemente umfasst, die jeweils den entgegengesetzten Endbereichen des Halters zugeordnet sind. Da am Halter der Gasgenerator angeordnet ist, liegt der verhältnismäßig größte Massenanteil im Bereich des Halters. Über die beiden magnetischen Befestigungselemente, die den Endbereichen des Halters zugeordnet sind, ist sichergestellt, dass das gesamte Gassack-Modul sicher an der Fahrzeugkarosserie befestigt ist. Zudem wird hierdurch verhindert, dass ein Drehmoment auf einen Endbereich des Halters wirkt. Vielmehr ist der Halter und somit das Gassack-Modul im Wesentlichen in symmetrischer Weise abgestützt.

Gemäß einer Ausführungsform handelt es sich bei dem Gassack-Modul um ein Seitengassack-Modul. Ein solches Seitengassack-Modul kann ein "curtain airbag module" sein, also ein Seitengassack-Modul, das im Bereich des Türrahmens angeordnet ist. Diese Gassack-Module zeichnen sich durch ihre längliche Form aus, wobei der Halter sowie der daran angeordnete Gasgenerator lediglich einen Teil der axialen Länge des Gassack-Moduls umfasst, da die axiale Länge vornehmlich durch den gefalteten Gassack definiert ist. Über die magnetischen Befestigungselemente ist dennoch eine sichere Befestigung des langgestreckten Gassack-Moduls gewährleistet.

Ferner wird die Aufgabe erfindungsgemäß durch eine Fahrzeugkarosserie mit einem Gassack-Modul der zuvor genannten Art gelöst. Die zuvor genannten Vorteile ergeben sich in analoger Weise für die Fahrzeugkarosserie, insbesondere hinsichtlich des Montageaufwands.

Darüber hinaus kann das Gassack-Modul zumindest außerhalb einer Fixierungsstelle schrauben- und/oder klemmenfrei an der Fahrzeugkarosserie befestigt sein. Das Gassack-Modul kann dementsprechend verhältnismäßig flexibel an der Fahrzeugkarosserie befestigt werden.

Gemäß einem weiteren Aspekt ist die Fahrzeugkarosserie, abgesehen von maximal ein oder zwei Befestigungsstellen, zumindest einem Positionierbereich eines Gassackmoduls, schnittstellenfrei ausgebildet, insbesondere ohne Bohrung und/oder Öffnung zur Aufnahme von Schrauben bzw. Klemmen, die zur Befestigung des Gassack-Moduls dienen. Die Herstellung der Fahrzeugkarosserie vereinfacht sich, da keine Schnittstellen für Schrauben bzw. Klemmen in der Fahrzeugkarosserie vorgesehen sind, die vor der Befestigung des Gassack-Moduls eingebracht werden müssten, was einen zusätzlichen Arbeitsschritt zur Folge hätte. Das Gassack-Modul kann flexibel und einfach an der Fahrzeugkarosserie befestigt werden, da über die magnetischen Befestigungselemente eine hohe Flexibilität bei der Montage gewährleistet ist.

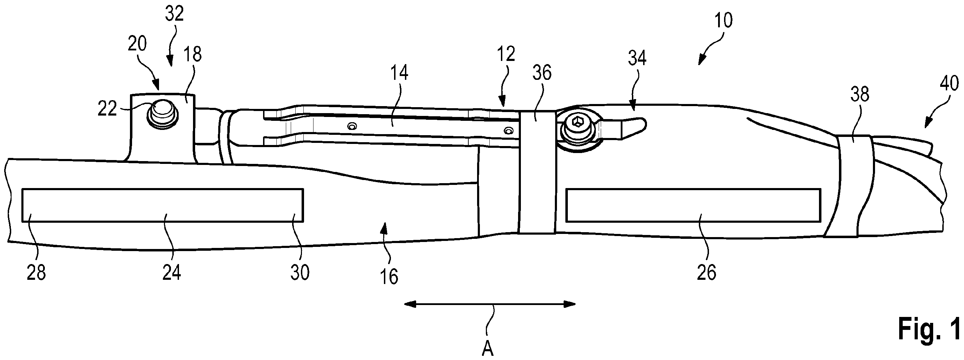

Weitere Vorteile und Eigenschaften der Erfindung ergeben sich aus der nachfolgenden Beschreibung und der Zeichnung, auf die Bezug genommen wird.

In der einzigen Figur ist ein erfindungsgemäßes Gassack-Modul 10 gezeigt, das als Seitengassack-Modul ausgebildet ist, genauer als ein sogenanntes "curtain airbag module".

Das Gassack-Modul 10 umfasst einen hier nicht zu sehenden Gasgenerator 12, der von einem Halter 14 gehalten ist. Zudem umfasst das Gassack-Modul 10 einen in der gezeigten Ausführungsform im gefalteten Zustand befindlichen Gassack 16, in den der Gasgenerator 12 zumindest teilweise ausgenommen ist, weswegen der Gasgenerator 12 nicht zu sehen ist.

Der gefaltete Gassack 16 weist einen außenliegenden Gewebeabschnitt bzw. Außenlage auf, die eine Fixierungslasche 18 umfasst, über die der Gassack 16 am Halter 14 lagefixiert ist. Hierzu umfasst der Halter 14 eine Fixierungsstelle 20, durch die sich in der gezeigten Ausführungsform ein Fixierungselement 22 erstreckt, das als Schraube ausgebildet ist.

Alternativ zum separat ausgebildeten Fixierungselement 22 kann ein Stift, Bolzen oder ähnliches Fixierungselement einstückig mit dem Halter 14 ausgebildet sein, das sich durch die Fixierungslasche 18 erstreckt bzw. in das die Fixierungslasche 18 eingehängt ist.

Über das Fixierungselement 22 kann der Gasgenerator 12 zudem am Halter 14 fixiert werden. Alternativ oder ergänzend ist der Gasgenerator 12 klemmend am Halter 14 und/oder über zusätzliche Sicherungsmittel gehalten.

Zur Befestigung des Gassack-Moduls 10 an einer Fahrzeugkarosserie des Kraftfahrzeugs, insbesondere einer Rohkarosserie, umfasst das Gassack-Modul 10 in der gezeigten Ausführungsform zwei magnetische Befestigungselemente 24, 26, die als magnetische Bänder ausgebildet sind, die selbstklebend sind. Es handelt sich bei den magnetischen Befestigungselementen 24, 26 also um magnetische Klebebänder.

Die beiden magnetischen Befestigungselemente 24, 26 weisen somit jeweils eine Klebeseite sowie eine entgegengesetzte, magnetische Seite auf. Über ihre Klebeseiten sind die magnetischen Befestigungselemente 24, 26 jeweils an der Außenlage des gefalteten Gassacks 16 angeordnet, wie aus der Figur hervorgeht.

Das erste magnetische Befestigungselement 24 ist dabei so am gefalteten Gassack 16 angeordnet, dass seine Enden 28, 30 jeweils einen im Wesentlichen gleichen Abstand zur Fixierungsstelle 20 aufweisen, die an einem ersten Endbereich 32 des Halters 14 vorgesehen ist.

Mit anderen Worten ist das erste magnetische Befestigungselement 24 so am gefalteten Gassack 16 angeordnet, dass seine Mitte die kürzeste Distanz zur Fixierungsstelle 20 im Vergleich zu den übrigen Teilen des ersten magnetischen Befestigungselements 24 hat.

Da sich die Fixierungsstelle 20 im ersten Endbereich 32 des Halters 14 befindet, bedeutet dies, dass die Mitte des ersten magnetischen Befestigungselements 24 im Wesentlichen auf einer Verbindungslinie mit dem ersten Ende des Halters 14 liegt, die senkrecht zur axialen Ausdehnung A des Gassacks 16 bzw. des Gassack-Moduls 10 ist.

Das zweite magnetische Befestigungselement 26 ist dagegen einem zweiten Endbereich 34 des Halters 14 zugeordnet, der entgegengesetzt zum ersten Endbereich 32 ist.

Die Befestigungselemente 24, 26 sind über ihre Klebeseiten jeweils auf der Außenlage des gefalteten Gassacks 16 befestigt, sodass das Gassack-Modul 10 über die entgegengesetzten, magnetischen Seiten der Befestigungselemente 24, 26 an der Fahrzeugkarosserie befestigt werden kann.

Dementsprechend wird das gesamte Gassack-Modul 10 über die beiden magnetischen Befestigungselemente 24, 26 an der Fahrzeugkarosserie befestigt, wobei die magnetischen Befestigungselemente 24, 26 den Endbereichen 32, 34 des Halters 14 zugeordnet sind. Hierdurch ist eine homogene Kraftverteilung bzw. Krafteinleitung in die Fahrzeugkarosserie gewährleistet, sodass eine sichere Befestigung des Gassack-Moduls 10 sichergestellt ist. Insbesondere werden so Drehmomente an den Endbereichen 32, 34 des Halters 14 verhindert.

Das Gassack-Modul 10 wird somit ausschließlich über die magnetischen Befestigungselemente 24, 26 an der Fahrzeugkarosserie befestigt.

Aus der Figur geht ferner hervor, dass der gefaltete Gassack 16 über ein erstes, umlaufendes Halteelement 36 am Halter 14 befestigt ist, das in der gezeigten Ausführungsform als Halteband ausgebildet ist, insbesondere als ein Klebeband. Zudem ist ein zweites, umlaufendes Halteelement 38 vorgesehen, das im Bereich eines axialen Endes 40 des gefalteten Gassacks 16 vorgesehen ist, welches dem zweiten Endbereich 34 des Halters 14 zugeordnet ist.

Beide Halteelemente 36, 38 dienen dazu, den gefalteten Gassack 16 in seinem gefalteten Zustand zu halten, sodass sich dieser nicht ungewollt entfaltet, insbesondere endseitig. Die Halteelemente 36, 38 laufen demnach umfangsmäßig um den im Wesentlichen zu einer Rolle gefalteten Gassack 16.

Das zweite magnetische Befestigungselement 26 erstreckt sich im Wesentlichen senkrecht zu den Halteelementen 36, 38 und ist zwischen den beiden Halteelementen 36, 38 angeordnet.

Dementsprechend erstreckt sich das zweite magnetische Befestigungselement 26 in axialer Richtung A zum gefalteten Gassack 16, wohingegen die beiden Halteelemente 36, 38 in Umfangsrichtung um den gefalteten Gassack 16 gelegt sind.

Das erste magnetische Befestigungselement 24 erstreckt sich im Wesentlichen parallel zum zweiten magnetischen Befestigungselement 26, also ebenfalls in axialer Richtung A des gefalteten Gassacks 16 bzw. des Gassack-Moduls 10.

Die beiden magnetischen Befestigungselemente 24, 26 sind, wie bereits erläutert, als selbstklebende magnetische Klebebänder ausgebildet. Sie weisen eine Länge zwischen 100 mm und 200 mm auf, insbesondere eine Länge von 150 mm. Die Breite der magnetischen Befestigungselemente 24, 26 kann zwischen 1 mm und 10 mm betragen.

Aufgrund dieser Dimensionen der magnetischen Befestigungselemente 24, 26 ist eine ausreichend große magnetisch aktive Fläche vorhanden, die eine sichere Befestigung des Gassack-Moduls 10 über die beiden magnetischen Befestigungselemente 24, 26 an der Fahrzeugkarosserie gewährleistet.

Da das Gassack-Modul 10 über die magnetischen Befestigungselemente 24, 26 an der Fahrzeugkarosserie befestigt wird, kann das Gassack-Modul 10 zumindest außerhalb der Fixierungsstelle 20 schrauben- bzw. klemmenfrei an der Fahrzeugkarosserie befestigt sein, insbesondere ausschließlich über die magnetischen Befestigungselemente 24, 26.

Dementsprechend muss an der Fahrzeugkarosserie keine Schnittstelle vorgesehen sein, also Öffnung bzw. Bohrung, die zur Aufnahme von Klemmen bzw. Schrauben dienen. Die Fahrzeugkarosserie ist folglich schnittstellenfrei ausgebildet.

Die Befestigung des Gassack-Moduls 10 erfolgt somit schnell und einfach, da der zusätzliche Arbeitsschritt eingespart werden kann, bei dem die Öffnungen bzw. Bohrungen in die Fahrzeugkarosserie zunächst eingebracht worden sind.

Die magnetischen Befestigungselemente 24, 26 können zudem keine Schutzfolien oder ähnliches aufweisen, die zunächst entfernt werden müssen, um die magnetischen Befestigungselemente 24, 26 an einen Teil des Gassack-Moduls 10 anzubringen, wodurch sich ein entsprechender Arbeitsschritt einsparen lässt. Zudem wird dadurch die Umwelt geschont.

Vorzugsweise handelt es sich bei den magnetischen Befestigungselementen 24, 26 um Rollenware, die abgerollt und geschnitten worden sind, sodass sie im abgelängten Zustand an einen Teil des Gassack-Moduls 10 angebracht worden sind.

Anstatt der Außenlage des gefalteten Gassacks 16 können die Befestigungselemente 24, 26 auch am Halter 14, an einem Teil des Gasgenerators 12 und/oder an einer Hülle des gefalteten Gassacks 16 angeordnet sein, in der der Gassack 16 im gefalteten Zustand aufgenommen ist.

Alternativ zu der ausschließlichen Befestigung des Gassack-Moduls 10 über die magnetischen Befestigungselemente 24, 26 kann das zur Fixierung des Gassacks 16 am Halter 12 dienende Fixierungselement 22, sofern gewünscht, zudem dazu verwendet werden, das Gassack-Modul 10 an einer Fahrzeugkarosserie zusätzlich mechanisch zu fixieren. Das Gassack-Modul 10 wäre dann mechanisch und magnetisch befestigt. Hierzu müsste dann allerdings eine entsprechende Schnittstelle in der Fahrzeugkarosserie im Bereich der Fixierungsstelle 20 des Gassack-Moduls 10 vorgesehen sein.

Generell ist eine einfach herzustellende, kostengünstige und flexible Möglichkeit geschaffen, um das Gassack-Modul 10 an der Fahrzeugkarosserie zu befestigen.

## Patentansprüche

1. Gassack-Modul (10) für ein Kraftfahrzeug, mit einem Gasgenerator (12), einem Halter (14) für den Gasgenerator (12) und einem gefalteten Gassack (16), der mittels des Gasgenerators (12) im Auslösefall aufblasbar ist, sodass sich der Gassack (16) entfalten kann, wobei das Gassack-Modul (10) wenigstens ein magnetisches Befestigungselement (24, 26) umfasst, über das das Gassack-Modul (10) an einer Fahrzeugkarosserie des Kraftfahrzeugs befestigbar ist, **dadurch gekennzeichnet, dass** der Halter (14) eine Fixierungsstelle (20) aufweist, über die unter anderem der gefaltete Gassack (16) am Halter (14) lagefixiert ist.

2. Gassack-Modul (10) nach Anspruch 1, **dadurch gekennzeichnet, dass** das wenigstens eine magnetische Befestigungselement (24, 26) ein magnetisches Band ist, insbesondere ein magnetisches Klebeband.

3. Gassack-Modul (10) nach Anspruch 1 oder 2, **dadurch gekennzeichnet, dass** die Fixierungsstelle (20) an einem ersten Endbereich (32) des Halters (14) vorgesehen ist.

4. Gassack-Modul (10) nach einem der Ansprüche 1 bis 3, **dadurch gekennzeichnet, dass** der Gassack (16) über eine Fixierungslasche (18) mit der Fixierungsstelle (20) gekoppelt ist, insbesondere eingehängt ist.

5. Gassack-Modul (10) nach einem der vorhergehenden Ansprüche, **dadurch gekennzeichnet, dass** das wenigstens eine magnetische Befestigungselement (24) so an einem Teil des Gassack-Moduls (10) angeordnet ist, dass entgegengesetzte Enden (28, 30) des wenigstens einen Befestigungselements (24) im Wesentlichen den gleichen Abstand zur Fixierungsstelle (20) haben.

6. Gassack-Modul (10) nach einem der vorhergehenden Ansprüche, **dadurch gekennzeichnet, dass** das wenigstens eine magnetische Befestigungselement (24, 26) am gefalteten Gassack (16) angeordnet ist.

7. Gassack-Modul (10) nach einem der vorhergehenden Ansprüche, **dadurch gekennzeichnet, dass** der gefaltete Gassack (16) mittels eines ersten, umlaufenden Halteelements (36) am Halter (14) befestigt ist, insbesondere am zweiten Endbereich (34) des Halters.

8. Gassack-Modul (10) nach einem der vorhergehenden Ansprüche, **dadurch gekennzeichnet, dass** der gefaltete Gassack (16) mittels eines zweiten, umlaufenden Halteelements (38) in seinem gefalteten Zustand gehalten ist.

9. Gassack-Modul (10) nach Anspruch 7 und 8, **dadurch gekennzeichnet, dass** das wenigstens eine magnetische Befestigungselement (26) zwischen dem ersten und dem zweiten Halteelement (36, 38) angeordnet ist.

10. Gassack-Modul (10) nach einem der vorhergehenden Ansprüche, **dadurch gekennzeichnet, dass** das wenigstens eine magnetische Befestigungselement (24, 26) eine Länge von 100 mm bis 200 mm aufweist, insbesondere 150 mm.

11. Gassack-Modul (10) nach einem der vorhergehenden Ansprüche, **dadurch gekennzeichnet, dass** das Gassack-Modul (10) zwei magnetische Befestigungselemente (24, 26) umfasst, die jeweils den entgegengesetzten Endbereichen (32, 34) des Halters (14) zugeordnet sind.

12. Gassack-Modul (10) nach einem der vorhergehenden Ansprüche, **dadurch gekennzeichnet, dass** das Gassack-Modul (10) ein Seitengassack-Modul, vorzugsweise ein Kopfgassack, ist.

13. Fahrzeugkarosserie mit einem Gassack-Modul (10) nach einem der vorhergehenden Ansprüche.

14. Fahrzeugkarosserie nach Anspruch 13, **dadurch gekennzeichnet, dass** das Gassack-Modul (10) zumindest außerhalb einer Fixierungsstelle schrauben- und/oder klemmenfrei an der Fahrzeugkarosserie befestigt ist.

15. Fahrzeugkarosserie nach Anspruch 13 oder 14, **dadurch gekennzeichnet, dass** die Fahrzeugkarosserie, abgesehen von maximal ein oder zwei Befestigungsstellen, zumindest einem Positionierbereich eines Gassackmoduls (10) schnittstellenfrei ausgebildet ist, also insbesondere ohne Bohrungen und/oder Öffnungen zur Aufnahme von Schrauben bzw. Klemmen, die zur Befestigung des Gassack-Moduls (10) dienen.

## Claims

1. An airbag module (10) for an automotive vehicle comprising a gas generator (12), a holder (14) for the gas generator (12) and a folded airbag (16) which is inflatable by means of the gas generator (12) in the case of deployment so that the airbag (16) may deploy, wherein the airbag module (10) comprises at least one magnetic fastening element (24, 26) by means of which the airbag module (10) is adapted to be fastened to a vehicle body of the automotive vehicle, **characterized in that** the holder (14) includes a fixation point (20) by means of which inter alia the folded airbag (16) is fixed in position on the holder (14).

2. The airbag module (10) according to claim 1, **characterized in that** the at least one magnetic fastening element (24, 26) is a magnetic tape, especially a magnetic adhesive tape.

3. The airbag module (10) according to claim 1 or 2, **characterized in that** the fixation point (20) is provided on a first end portion (32) of the holder (14).

4. The airbag module (10) according to any one of the claims 1 to 3, **characterized in that** the airbag (16) is coupled to, especially suspended in, the fixation point (20) by means of a fixation tab (18).

5. The airbag module (10) according to any one of the preceding claims, **characterized in that** the at least one magnetic fastening element (24) is arranged on a part of the airbag module (10) so that opposed ends (28, 30) of the at least one fastening element (24) are substantially equally distanced from the fixation point (20).

6. The airbag module (10) according to any one of the preceding claims, **characterized in that** the at least one magnetic fastening element (24, 26) is arranged on the folded airbag (16).

7. The airbag module (10) according to any one of the preceding claims, **characterized in that** the folded airbag (16) is fastened to the holder (14), especially to the second end portion (34) of the holder, by means of a first circumferential holding element (36).

8. The airbag module (10) according to any one of the preceding claims, **characterized in that** the folded airbag (16) is retained in its folded state by means of a second circumferential holding element (38).

9. The airbag module (10) according to claim 7 and 8, **characterized in that** the at least one magnetic fastening element (26) is arranged between the first and the second holding element (36, 38).

10. The airbag module (10) according to any one of the preceding claims, **characterized in that** the at least one magnetic fastening element (24, 26) has a length of 100 mm to 200 mm, especially 150 mm.

11. The airbag module (10) according to any one of the preceding claims, **characterized in that** the airbag module (10) comprises two magnetic fastening elements (24, 26) which are associated with the respective opposed end portions (32, 34) of the holder (14).

12. The airbag module (10) according to any one of the preceding claims, **characterized in that** the airbag module (10) is a side airbag module, preferably a head airbag.

13. A vehicle body comprising an airbag module (10) according to any one of the preceding claims.

14. The vehicle body according to claim 13, **characterized in that** at least outside a fixation point the airbag module (10) is fastened to the vehicle body free from screws and/or clamps.

15. The vehicle body according to claim 13 or 14, **characterized in that,** apart from a maximum of one or two fastening points, the vehicle body is configured at least in a positioning portion of an airbag module (10) free from interfaces, i.e. especially without any bores and/or openings for receiving screws or clamps which serve for fastening the airbag module (10).

## Revendications

1. Module airbag (10) pour véhicule automobile, avec un générateur de gaz (12), un support (14) pour le générateur de gaz (12) et un coussin gonflable plié (16) qui peut être gonflé au moyen du générateur de gaz (12) lorsqu'il est déclenché, de sorte que le coussin gonflable (16) puisse se déplier, pour lequel le module de coussin gonflable (10) comprend au moins un élément de fixation magnétique (24, 26) au moyen duquel le module airbag (10) peut être fixé à une carrosserie de véhicule automobile, **caractérisé en ce que** le support (14) possède un point de fixation (20) par lequel, entre autres, le coussin gonflable plié (16) est fixé en position sur le support (14).

2. Module airbag (10) selon la revendication 1, **caractérisé en ce que** au moins un élément de fixation magnétique (24, 26) est une bande magnétique, notamment une bande magnétique adhésive.

3. Module airbag (10) selon la revendication 1 ou 2, **caractérisé en ce que** le point de fixation (20) est prévu sur une première zone d'extrémité (32) du support (14).

4. Module airbag (10) selon l'une des revendications 1 à 3, **caractérisé en ce que** l'airbag (16) via une patte de fixation (18) est couplé, particulièrement suspendu, au point de fixation (20).

5. Module airbag (10) selon l'une des revendications précédentes, **caractérisé en ce que** le au moins un élément de fixation magnétique (24) est disposé sur une partie du module airbag (10), de sorte que des extrémités opposées (28, 30) d'au moins un élément de fixation (24) sont sensiblement à la même distance du point de fixation (20).

6. Module airbag (10) selon l'une des revendications précédentes, **caractérisé en ce que** au moins un élément de fixation magnétique (24, 26) est disposé sur le coussin gonflable plié (16).

7. Module airbag (10) selon l'une des revendications précédentes, **caractérisé en ce que** le coussin gonflable plié (16) est fixé au support (14) au moyen d'un premier élément de maintien circonférentiel (36), particulièrement à la deuxième zone d'extrémité (34) du support.

8. Module airbag (10) selon l'une des revendications précédentes, **caractérisé en ce que** le coussin gonflable plié (16) est maintenu dans son état plié au moyen d'un deuxième élément de maintien circonférentiel (38).

9. Module airbag (10) selon les revendications 7 et 8, **caractérisé en ce que** le au moins un élément de fixation magnétique (26) est disposé entre le premier et le deuxième élément de maintien (36, 38).

10. Module airbag (10) selon l'une quelconque des revendications précédentes, **caractérisé en ce que** le au moins un élément de fixation magnétique (24, 26) a une longueur de 100 mm à 200 mm, plus particulièrement 150 mm.

11. Module airbag (10) selon l'une des revendications précédentes, **caractérisé en ce que** le module airbag (10) comprend deux éléments de fixation magnétique (24, 26), lesquels sont disposés à des régions d'extrémité opposées (32, 34) du support (14).

12. Module airbag (10) selon l'une des revendications précédentes, **caractérisé en ce que** le module airbag (10) est un module airbag latéral, de préférence un module airbag de tête.

13. Carrosserie de véhicule avec un module airbag (10) selon l'une des revendications précédentes.

14. Carrosserie de véhicule selon la revendication 13, **caractérisée en ce que** le module airbag (10) est fixé à l'extérieur sur la carrosserie du véhicule au moyen d'un point de fixation sans vis et/ou coincement.

15. Carrosserie de véhicule selon la revendication 13 ou 14, **caractérisée en ce que** la carrosserie du véhicule est conçue sans interfaces, en dehors d'un maximum d'un ou deux points de fixation, avec moins une zone de positionnement d'un module airbag (10), c'est-à-dire notamment sans alésages et/ou ouvertures pour recevoir des vis ou pinces utilisées pour fixer le module airbag (10).
